# EUROPÄISCHE PATENTSCHRIFT

(11) **EP 1 573 236 B1**
(45) Veröffentlichungstag und Bekanntmachung des Hinweises auf die Patenterteilung: **30.08.2006**
(21) Anmeldenummer: 03782110.5
(22) Anmeldetag: 27.11.2003
(51) Int. Cl.: F16J 1/16, F16C 33/10

(54) **KOLBEN FÜR EINEN VERBRENNUNGSMOTOR**
PISTON FOR AN INTERNAL COMBUSTION ENGINE
PISTON POUR UN MOTEUR A COMBUSTION

(30) Priorität: 29.11.2002 DE 10255731
(43) Veröffentlichungstag der Anmeldung: 14.09.2005
(73) Patentinhaber: MAHLE GMBH, D-70376 Stuttgart (DE)
(72) Erfinder: ANDERSON, Werner, 72644 Oberboihingen (DE); HOCH, Thomas, 70435 Stuttgart (DE)
(74) Vertreter: Pohle, Reinhard
(86) Internationale Anmeldenummer: PCT/DE2003/003928
(87) Internationale Veröffentlichungsnummer: WO 2004/051118

(56) Entgegenhaltungen:
- DE-A- 3 830 033
- FR-A- 1 239 739
- US-A1- 2002 061 146

## Beschreibung

Die Erfindung betrifft einen Kolben für einen Verbrennungsmotor nach dem Oberbegriff des Anspruches 1.

Aus den Offenlegungsschriften DE 38 30 033 A1 und FR 1239 739 ist es bekannt, in die Bolzenbohrung eines Kolbens für einen Verbrennungsmotor eine über deren Nadir- und Äquatorbereich umlaufende Schmiernut einzuarbeiten, wodurch sich ein der Schmierung des in die Bolzenbohrung eingeführten Kolbenbolzens dienendes Ölreservoir bildet. Ublicherweise wird hierbei zunächst mittels eines Vordrehstahles die Bolzenbohrung in die Bolzennabe eingedreht, wonach im Rahmen eines zweiten Verfahrensschrittes die Innenfläche der Bolzenbohrung feinbearbeitet wird. Erst in einem 3. Verfahrensschritt wird die eigentliche Schmiernut in die fertig bearbeitete Bolzenbohrung eingefräst. Ein derartiges Verfahren is z.B. aus der DE 38 30 033A1 bekannt.

Hiervon ausgehend liegt der Erfindung die Aufgabe zugrunde, die mit einer Schmiernut versehene Bolzenbohrung eines Kolbens für eine Brennkraftmaschine derart zu gestalten, dass deren Herstellung vereinfacht und verbilligt werden kann.

Die Lösung dieser Aufgabe ist im Kennzeichen des Hauptanspruches angegeben.

Zweckmäßige Ausgestaltungen des Erfindung sind Gegenstand der Unteransprüche.

Die erfindungsgemäße Ausgestaltung der Schmiernut einer Bolzenbohrung hat hierbei den Vorteil, dass nach dem Drehen der Bolzenbohrung nur ein einziger weiterer Verfahrensschritt zur Feinbearbeitung der Bolzenbohrung und zur Herstellung der Schmiernut erforderlich ist, da parallel zur Feinbearbeitung der Innenfläche der Bolzenbohrung lediglich der Form der Schmiernut entsprechende Relativbewegungen zwischen dem Kolben und dem Drehmeißel erforderlich sind, um die als Flachnut ausgebildete Schmiernut in die Innenfläche der Bolzenbohrung einzudrehen.

Ein Ausführungsbeispiel der Erfindung wird im Folgenden anhand der Zeichnungen beschrieben. Es zeigen
- Fig. 1: einen Kolben im Schnitt mit Bolzenbohrungen, die jeweils eine erfindungsgemäße Schmiernut aufweisen,
- Fig. 2: eine Vergrößerung des Ausschnittes II aus Fig. 1 mit einer Schnittdarstellung der Schmiernut und
- Fig. 3: einen Teilschnitt durch den Kolben entlang der Linie III-III in Fig. 1 mit einer Seitensicht der Schmiernut.

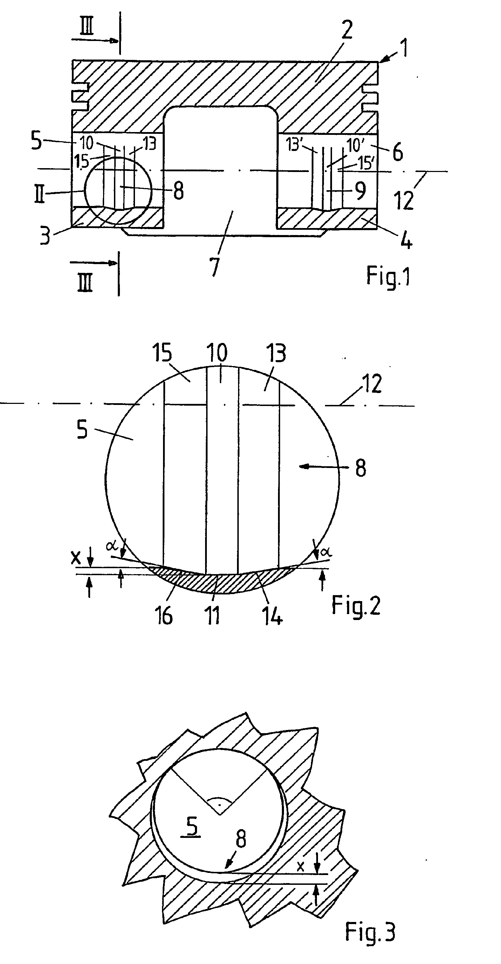

Fig. 1 zeigt einen Kolben 1 für einen Verbrennungsmotor im Schnitt mit einem Kolbenkopf 2, an dem zwei Bolzennaben 3 und 4 mit je einer Bolzenbohrung 5 und 6 angeformt sind. Bei der in Fig. 1 gewählten Schnittrichtung ist einer der beiden Schafte 7 des Kolbens 1 in Draufsicht dargestellt.

Im mittleren Bereich der Bolzenbohrungen 5, 6 ist jeweils eine Schmiernut 8, 9 eingearbeitet, die, wie in Fig. 2, einem vergrößerten Ausschnitt II aus Fig. 1, dargestellt ist, einen zentralen Bereich 10 aufweist, dessen Nutgrund 11 parallel zur Längsachse 12 der Bolzenbohrungen 5 liegt. Zur Kolbeninnenseite hin schließt sich an den Bereich 10 ein Nutbereich 13 an, dessen Nutgrund 14 schräg zur Kolbeninnenseite hin und in Richtung Längsachse 12 geneigt ist und mit der Längsrichtung der Bolzenbohrung 5 einen spitzen Winkel α von weniger als 3° einschließt. Zur Kolbenaußenseite hin schließt sich an den zentralen Bereich 10 ein Nutbereich 15 an, dessen Nutgrund 16 schräg zur Kolbenaußenseite hin und ebenfalls in Richtung Längsachse 12 geneigt ist und den gleichen Winkel α von weniger als 3° mit der Längsrichtung der Bolzenbohrung 5 einschließt. Die Schmiernut 9 in der Bolzenbohrung 6 weist die gleiche Form wie die Schmiernut 8 auf. Die Tiefe x der zentralen Bereiche 10 der beiden Schmiernuten 8 und 9 hat einen Wert von ca 40 bis 60 µm.

In Fig. 1 ist angedeutet und in der nicht-maßstabsgerechten Seitendarstellung der Schmiernut 8 gemäß Fig. 3, einem Teilschnitt entlang der Linie III-III in Fig. 1, ist deutlich erkennbar, dass die Schmiernut 8 (wie auch die Schmiernut 9) in den Nadir-und den Äquatorbereich der Bolzenbohrung 5 eingearbeitet ist und einen Bereich von ca 270° überdeckt. Hierbei bleibt somit im Zenit ein Bereich von ca 90° frei von Nuten, wodurch sich der Vorteil ergibt, dass die Flächenpressung des Zenitbereiches, die sich bei eingeführtem Kolbenbolzen unter der Krafteinwirkung des Arbeitstaktes ergibt, durch eine Schmiernut nicht beeinträchtigt wird.

Die Schmiernuten 8 und 9 bilden je ein Ölreservoir, das sowohl beim Anlauf eines mit dem Kolben 1 ausgestatteten Motors als auch im Dauerbetrieb des Motors die Ölversorgung zur Schmierung eines in die Bolzenbohrung 5, 6 eingeführten, in den Figuren nicht dargestellten Kolbenbolzens sichert. Gefüllt wird dieses Ölreservoir durch die Pumpwirkung des sich im Motorbetrieb verformenden Kolbenbolzens, sodass hierzu ein separater Ölzulauf nicht erforderlich ist.

Hergestellt werden die Schmiernuten 8 und 9 auf dieselbe Weise, wie herkömmliche, in die Enden von Bolzenbohrungen eingearbeitete Formbohrungen. Hierbei werden zunächst mittels eines Vordrehstahles die eigentlichen Bolzenbohrungen 5, 6 in die Bolzennaben 3, 4 eingedreht. Anschließend werden mittels eines Drehmeißels mit seitlich hervorstehender Schneide die Innenflächen der Bolzenbohrungen 5, 6 feinbearbeitet und gleichzeitig die als Flachnuten ausgebildete Schmiernuten 8, 9 in die Innenflächen der Bolzenbohrungen 5, 6 eingedreht.

Da die Schmiernuten 8, 9 nur ca 270° des Nadir- und Äquatorbereiches der Innenflächen der Bolzenbohrungen 5, 6 überdecken und im Schnitt die in Fig. 3 dargestellte Sichelform aufweisen, muss bei der Herstellung der Schmiernuten 8, 9 der in Drehung versetzte Drehmeißel bei jeder einzelnen Drehung im Bereich der Schmiernuten 8, 9 so weit ausgelenkt werden, dass hierdurch die geforderte Tiefe der Schmiernuten 8, 9 von 40 bis 60 µm erreicht wird.

Alternativ hierzu kann bei in Drehung versetztem Drehmeißel der Kolben 1 immer dann ein kleines Stück ausgelenkt werden, wenn sich die Schneide des Drehmeißel in demjenigen Bereich der Innenfläche der Bolzenbohrung 5, 6 befindet, in den die Schmiernut 8, 9 eingedreht werden soll.

Vorteilhaft ist hierbei, dass nach dem Drehen der Bolzenbohrungen nur ein einziger weiterer Verfahrensschritt zur Herstellung der erfindungsgemäßen Schmiernuten 8, 9 erforderlich ist, da parallel zur Feinbearbeitung der Bohrungsinnenflächen lediglich der Form der Schmiernuten 8, 9 entsprechende Relativbewegungen zwischen Kolben und Drehmeißel zur Herstellung der Schmiernuten 8, 9 erforderlich sind.

### Bezugszeichenliste

- 1: Kolben
- 2: Kolbenkopf
- 3: Bolzennabe
- 4: Bolzennabe
- 5: Bolzenbohrung
- 6: Bolzenbohrung
- 7: Schaft
- 8: Schmiernut
- 9: Schmiernut
- 10,10': zentraler Bereich
- 11: Nutgrund des zentralen Bereiches10
- 12: Längsachse
- 13,13': Nutbereich
- 14: Nutgrund des Bereiches 13
- 15,15': Nutbereich
- 16: Nutgrund des Bereiches 15

## Patentansprüche

1. Kolben (1) für einen Verbrennungsmotor
- mit einem Kolbenkopf (2),
- mit zwei an den Kolbenkopf (2) angeformten Bolzennaben (3, 4),
- mit je einer in die Bolzennaben (3, 4) eingearbeiteten Bolzenbohrung (5, 6), wobei in Richtung der Längsachse (12) der Bolzenbohrungen (5, 6) betrachtet in die mittleren Bereiche der Innenflächen jeweils mindestens eine über den Nadir- und den Äquatorbereich der Bolzenbohrungen (5, 6) umlaufende, zumindest halbkreisförmige Schmiernut (8, 9) eingearbeitet ist,
**dadurch gekennzeichnet,**
- **dass** die Schmiernut (8, 9) einen zentralen Bereich (10, 10') aufweist, dessen Nutgrund (11) parallel zur Längsachse (12) der Bolzenbohrung (5, 6) liegt und gegenüber der jeweiligen Innenfläche der Bolzenbohrung (5, 6) eine Tiefe von weniger als 100 µm aufweist,
- **dass** sich zur Kolbeninnenseite hin an den zentralen Bereich (10, 10') der Schmiernut (8, 9) ein Nutbereich (13, 13') anschließt, dessen Nutgrund (14) schräg zur Kolbeninnenseite hin in Richtung Längsachse (12) geneigt ist und mit der Längsrichtung der Bolzenbohrung (5, 6) einen spitzen Winkel von weniger als 3° einschließt, und
- **dass** sich zur Kolbenaußenseite hin an den zentralen Bereich (10, 10') der Schmiernut (8, 9) ein Nutbereich (15, 15') anschließt, dessen Nutgrund (16) schräg zur Kolbenaußenseite hin in Richtung Längsachse (12) geneigt ist und mit der Längsrichtung der Bolzenbohrung (5, 6) einen spitzen Winkel von weniger als 3° einschließt.

2. Kolben nach Anspruch 1, **dadurch gekennzeichnet, dass** die Innenfläche des Nutgrundes (11) des zentralen Bereiches (10, 10') der jeweiligen Schmiernut (8, 9) parallel zur Längsachse (12) der Bolzenbohrung (5, 6) liegt.

3. Kolben nach Anspruch 1 oder 2, **dadurch gekennzeichnet, dass** die Tiefe des Nutgrundes (11) des zentralen Bereiches (10, 10') der jeweiligen Schmiernut (8, 9) gegenüber der Innenfläche der jeweiligen Bolzenbohrung (5, 6) 40 bis 60 µm beträgt.

4. Kolben nach einem der vorhergehenden Ansprüche, **dadurch gekennzeichnet, dass** in jede der Bolzenbohrungen (5, 6) mehr als eine Schmiernut (8, 9) eingearbeitet ist.

## Claims

1. Piston (1) for an internal combustion engine,
- with a piston head (2),
- with two pin bosses (3, 4) formed on the piston head (2),
- each with a pin bore (5, 6) machined into the pin bosses (3, 4), whereby as viewed in the direction of the longitudinal axis (12) of the pin bores (5, 6) at least one lubrication groove (8, 9) is machined respectively into the central regions of the inner surfaces, which lubrication groove runs around the nadir and equator region of the pin bores (5, 6) and has at least a semi-circular shape,
**characterised in that**
- the lubrication groove (8, 9) has a central region (10, 10'), the groove base (11) of which lies parallel to the longitudinal axis (12) of the pin bore (5, 6) and relative to the respective inner surface of the pin bore (5, 6) has a depth of less than 100 µm,
- **in that** towards the inner side of the piston at the central region (10, 10') of the lubrication groove (8, 9) there is a groove region (13, 13'), the base (14) of said groove being inclined obliquely towards the inner side of the piston in the direction of the longitudinal axis (12) and with the longitudinal direction of the pin bore (5, 6) encloses an acute angle of less than 3°, and
- **in that** towards the outer side of the piston at the central region (10, 10') of the lubrication groove (8, 9) there is a groove region (15, 15'), the base (16) of said groove being inclined obliquely towards the outside of the piston in the direction of the longitudinal axis (12) and with the longitudinal direction of the pin bore (5, 6) encloses an acute angle of less than 3°.

2. Piston according to claim 1, **characterised in that** the inner surface of the groove base (11) of the central region (10, 10') of the respective lubrication groove (8, 9) lies parallel to the longitudinal axis (12) of the pin bore (5, 6).

3. Piston according to claim 1 or 2, **characterised in that** the depth of the groove base (11) of the central region (10, 10') of the respective lubrication groove (8, 9) is 40 to 60 µm relative to the inner surface of the respective pin bore (5, 6).

4. Piston according to one of the preceding claims, **characterised in that** more than one lubrication groove (8, 9) is machined into each of the pin bores (5, 6).

## Revendications

1. Piston (1) pour un moteur à combustion
- comportant une tête de piston (2),
- comportant deux moyeux d'axe (3, 4) formés sur la tête de piston (2), comportant chaque fois un alésage d'axe (5, 6) ménagé dans les moyeux d'axe (3, 4), à chaque fois au moins une gorge de lubrification (8, 9) de forme au moins semi-circulaire et s'étendant sur la zone de nadir et d'équateur des alésages d'axe (5, 6) étant ménagée dans les zones centrales des surfaces intérieures,
**caractérisé en ce**
- **que** la gorge de lubrification (8, 9) comporte une zone centrale (10, 10') dont le fond de gorge est parallèle à l'axe longitudinal (12) de l'alésage d'axe (5, 6) et présente par rapport à la surface intérieure respective de l'alésage d'axe (5, 6) une profondeur de moins de 100 µm,
- **que** vers le côte intérieur du piston, il se raccorde à la zone centrale (10, 10') de la gorge de lubrification (8, 9) une zone de gorge (13, 13') dont le fond de gorge (14) est incliné en oblique en direction de l'axe longitudinal (12) et forme avec la direction longitudinale de l'alésage d'axe (5, 6) un angle aigu de moins de 3°, et
- **que** vers le côte extérieur du piston, il se raccorde à la zone centrale (10, 10') de la gorge de lubrification (8, 9) une zone de gorge (15, 15') dont le fond de gorge (16) est incliné en oblique en direction de l'axe longitudinal (12) et forme avec la direction longitudinale de l'alésage d'axe (5, 6) un angle aigu de moins de 3°.

2. Piston selon la revendication 1, **caractérisé en ce que** la surface intérieure du fond de gorge (11) de la zone centrale (10, 10') de la gorge de lubrification (8, 9) respective est parallèle à l'axe longitudinal (12) de l'alésage d'axe (5, 6).

3. Piston selon la revendication 1 ou 2, **caractérisé en ce que** la profondeur du fond de gorge (11) de la zone centrale (10, 10') de la gorge de lubrification (8, 9) respective par rapport à la surface intérieure de l'alésage d'axe (5, 6) est comprise entre 40 et 60 µm.

4. Piston selon l'une des revendications précédentes, **caractérisé en ce que** dans chacun des alésages d'axe (5, 6) est ménagée plus d'une gorge de lubrification (8, 9).
